# EUROPÄISCHE PATENTANMELDUNG

(11) **EP 4 220 900 A1**
(43) Veröffentlichungstag der Anmeldung: **02.08.2023**
(21) Anmeldenummer: 22154011.5
(22) Anmeldetag: 28.01.2022
(51) Int. Cl.: H02K 1/276, H02K 15/03, H02K 1/30

(54) **DYNAMOELEKTRISCHE ROTATORISCHE MASCHINE**

(71) Anmelder: Siemens Aktiengesellschaft, 80333 München (DE)
(72) Erfinder: Vollmer, Rolf, 36129 Gersfeld (DE); Seufert, Reiner, 97616 Salz (DE)
(74) Vertreter: Siemens Patent Attorneys

(57) **Zusammenfassung**

Die Erfindung betrifft eine dynamoelektrische rotatorische Maschine (1), aufweisend: einen Stator (2) mit einer Statorwicklung (11); einen Rotor (3) mit einer wenigstens im Wesentlichen zylindrischen Ausnehmung (0) zur Aufnahme einer Welle (6); wobei der Rotor (3) ein erstes Material (8) und ein zweites Material (9) aufweist, wobei das erste Material (8) in einem Bereich des Rotors (3) ausgebildet ist, in welchem ein d-Flusspfad (5) eines magnetischen Flusses der von einem von der Statorwicklung (11) erzeugbaren magnetischen Statorfeld hervorrufbar ist, liegt, wobei das zweite Material (9) in einem Bereich des Rotors (3) ausgebildet ist, in welchem ein q-Flusspfad (51, 52) des magnetischen Flusses liegt.

## Beschreibung

Die Erfindung betrifft eine dynamoelektrische rotatorische Maschine.

Bei Reluktanzmaschinen und permanenterregten Maschinen, insbesondere mit innenliegenden Magneten, sind oft Kompromisse zwischen Rotorfestigkeit bzw. Drehzahlfestigkeit und magnetischer Streuung nötig. Oft ist eine Drehzahl der Maschine durch eine geringe Rotorfestigkeit begrenzt oder eine Leistungs- und/oder eine Drehmomentdichte sind durch eine magnetische Streuung reduziert. Meist geht das Erreichen einer erwünschten Drehzahlfestigkeit zu Lasten der Leistungs- bzw. Drehmomentdichte.

Der Erfindung liegt die Aufgabe zugrunde eine Maschine dahingehend zu verbessern.

Die Lösung der Aufgabe gelingt durch Anspruch 1, d. h. eine dynamoelektrische rotatorische Maschine, aufweisend:
- einen Stator mit einer Statorwicklung,
- einen Rotor mit einer wenigstens im Wesentlichen zylindrischen Ausnehmung zur Aufnahme einer Welle,
wobei der Rotor ein erstes Material und ein zweites Material aufweist, wobei das erste Material in einem Bereich des Rotors ausgebildet ist, in welchem ein d-Flusspfad eines magnetischen Flusses, der von einem von der Statorwicklung erzeugbaren magnetischen Statorfeld hervorrufbar ist, liegt, wobei das zweite Material in einem Bereich des Rotors ausgebildet ist, in welchem ein q-Flusspfad des magnetischen Flusses liegt.

Das Statorfeld wird vorteilhaft durch Bestromung der Statorwicklung erzeugt.

Vorteilhaft ist eine Ausführung, wonach das erste Material ein weichmagnetisches Material ist, beispielsweise Eisen und/oder Kobalt.

Auch andere Materialien, insbesondere Materialien mit einer Sättigungsinduktion von wenigstens 2,1 T, sind möglich.

Das erste Material dient der Führung des magnetischen Flusses. Das erste Material ist vorteilhaft so im Rotor angeordnet, dass es einerseits den magnetischen Fluss des Statorfeldes in der d-Flussrichtung des Rotors besonders gut leitet und andererseits den magnetischen Fluss der Permanentmagnete in der q-Flussrichtung des Rotors besonders gut leitet.

Vorteilhaft ist eine Ausführung, wonach das zweite Material ein amagnetisches Material ist, beispielsweise amagnetischer Stahl, z.B. E316.

Das zweite Material stellt für den magnetischen Fluss einen hohen Widerstand dar.

Das Material ist vorteilhaft so im Rotor angeordnet, dass es dem magnetischen Fluss der Statormagnete in der q-Flussrichtung des Rotors einen hohen Widerstand bietet und die magnetische Streuung der PM-Magnete im Rotor reduziert.

Vorteilhaft ist eine Ausführung, wonach der Rotor einen einen Innenumfang des Rotors umgebenden Bereich aufweist, in welchem das zweite Material ausgebildet ist.

So kann eine gute Stabilität des Rotors, insbesondere in einem an eine Welle angrenzenden Bereich, erreicht werden.

Vorteilhaft ist eine Ausführung, wonach der Rotor einen an einen Außenumfang des Rotors angrenzenden Bereich aufweist, in welchem das zweite Material ausgebildet ist.

Auch dies wirkt sich positiv auf eine Drehzahlfestigkeit des Rotors aus.

Vorteilhaft ist eine Ausführung, wonach zwischen dem den Innenumfang umgebenden Bereich und dem an den Außenumfang angrenzenden Bereich ein Bereich angeordnet ist, in welchem ein drittes Material ausgebildet ist.

Vorteilhaft ist eine Ausführung, wonach das dritte Material ein permanentmagnetisches Material ist.

Diese Ausführung ist vorteilhaft, da durch die Statormagnete hohe Reluktanzdrehmomente erzeugt werden können und zudem hohe Drehmomente im Zusammenwirken mit den Permanentmagneten erzeugt werden können.

So kann eine hohe Drehmoment- bzw. Leistungsdichte erreicht werden.

Vorzugsweise werden die Bereiche mit dem ersten Material und dem zweiten Material mittels Sieb- bzw. Schablonendruck hergestellt. Dies gelingt insbesondere durch das weiter unten erläuterte Verfahren. Vorzugsweise sind Aussparungen bzw. Ausnehmungen im Rotor vorhanden, in welchen vorzugsweise vorgefertigte Permanentmagnete eingebracht werden.

Vorteilhaft ist eine Ausführung, wonach das dritte Material den Bereich, der den Innenumfang umgibt, und den Bereich, der an den Außenumfang angrenzt, tangiert.

Diese Anordnung wird in der Figurenbeschreibung näher erläutert.

Die Permanentmagnete werden so sicher fixiert. Vorzugsweise werden sie noch zusätzlich mit Klebstoff und/oder Harz fixiert.

Vorteilhaft ist eine Ausführung, wonach der Bereich, in welchem ein drittes Material ausgebildet ist, in Form eines Rechtecks ausgebildet ist,
wobei der den Innenumfang umgebende Bereich wenigstens einen Abschnitt aufweist, der so geformt ist, dass er mit einer Seite des tangierenden rechteckigen Bereichs bündig ist.

Vorteilhaft ist eine Ausführung, wonach der am Außenumfang angrenzende Bereich wenigstens einen Abschnitt aufweist, der so geformt ist, dass er mit einer Seite des tangierenden rechteckigen Bereichs bündig ist.

So können vorgefertigte Permanentmagnete verwendet werden und leicht in den Rotor eingeschoben bzw. eingepresst werden.

Vorteilhaft ist eine Ausführung, wonach am Außenumfang angrenzend zwei weitere Bereiche ausgebildet sind, in welchen das zweite Material ausgebildet ist, wobei zwischen den weiteren Bereichen und diese tangierend ein weiterer Bereich ausgebildet ist, in welchem das dritte Material ausgebildet ist.

Das dritte Material ist vorteilhaft im q-Flusspfad des Rotors angeordnet. Das dritte Material ist vorzugsweise in Form von Permanentmagneten vorhanden. Diese erzeugen einerseits ein eigenes magnetisches Feld in der q-Achse, anderseits erzeugen sie auch einen magnetischen Widerstand gegen das Statorfeld in der q-Achse.

Die Reluktanzdrehmomente sind besonders groß, wenn die weichmagnetische Anisotropie des Rotors groß ist. Das wird vorteilhaft dadurch erreicht, dass im d-Pfad der magnetische Widerstand gering ist (z. B. wenig Luftspalte oder wenig amagnetisches Material) und wenn im q-Pfad viel amagnetisches Material vorhanden ist. Die Magnete wirken dann vorteilhaft wegen der geringen Permeabilität wie amagnetisches Material. Die Magnete bilden vorteilhaft durch ihren magnetischen Fluss auch Drehmomente. Dazu ist vorteilhaft im q-Pfad (bis auf die Magnete) wenig amagnetisches Material oder ein ausreichend großer Luftspalt ausgebildet

Vorteilhaft ist eine Ausführung, wonach das erste Material und das zweite Material stoffschlüssig verbunden sind.

So können stabile einzelne Rotorlagen geschaffen und somit ein drehzahlfester Rotor gebaut werden.

Vorteilhaft ist eine Ausführung, wonach der den Innenumfang umgebende Bereich sternförmige Fortsätze aufweist.

Dadurch wird der magnetische Streufluss im inneren Rotorbereich weiter reduziert und zudem die Festigkeit erhöht.

Die Lösung der Aufgabe gelingt ferner durch einen Rotor für eine dynamoelektrische rotatorische Maschine, aufweisend eine Mehrzahl hintereinander angeordneter Materiallagen.

Die Lösung der Aufgabe gelingt ferner durch ein Verfahren zur Herstellung eines derartigen Rotors, wobei eine Materiallage wenigstens einen ersten Bereich, aufweisend ein erstes Material, und wenigstens einen zweiten Bereich, aufweisend ein zweites Material, umfasst, wobei die Materiallage ferner wenigstens eine Aussparung umfasst, mit folgenden Schritten:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Bereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Bereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung, zur Bildung der Materiallage,
- Anordnen einer Mehrzahl an Materiallagen,
- Einfügen von Magnetmaterial, insbesondere vorgefertigtem Magnetmaterial, in die Ausnehmung.

Im Folgenden wird die Erfindung anhand der in den Figuren dargestellten Ausführungsbeispiele näher beschrieben und erläutert.

Es zeigen:
- FIG 1, 3, 4, 5 und 9: Ausführungsformen einer dynamoelektrischen rotatorische Maschine,
- FIG 2, 7 und 8: Ausführungsformen einer Rotorlage,
- FIG 6: ein Verfahren,
- FIG 10: einen Ausschnitt aus FIG 8

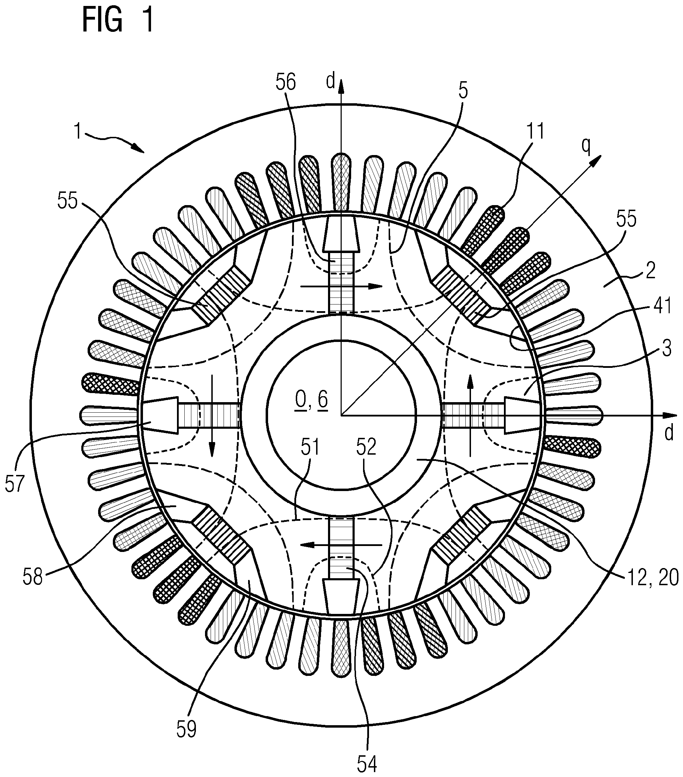

FIG 1 zeigt eine dynamoelektrische rotatorische Maschine 1.

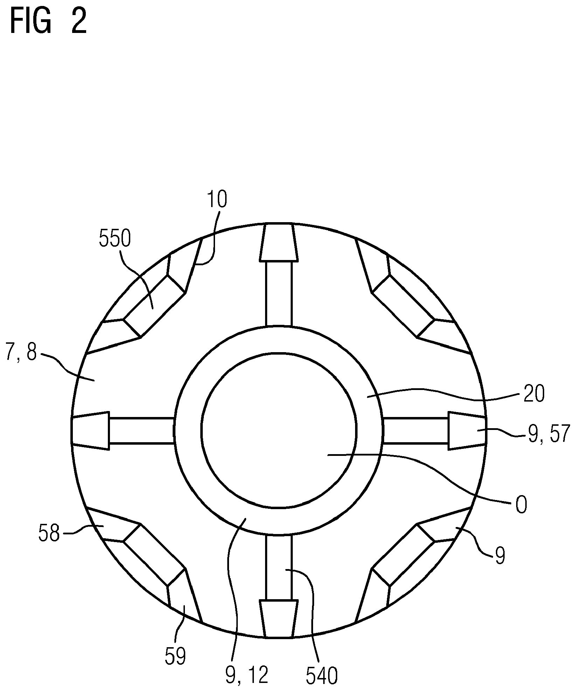

Die Maschine 1 weist einen Stator 2 mit einer Statorwicklung 11 auf. Zudem weist die Maschine 1 einen Rotor 3 auf. Der Rotor 3 weist eine wenigstens im Wesentlichen zylindrische Ausnehmung auf (siehe Bezugszeichen 0 in Figur 2). Die Ausnehmung ist zur Aufnahme einer Welle 6 ausgebildet. Der Rotor 3 weist ein erstes Material 8 und ein zweites Material 9 auf. Die beiden Materialien 8, 9 (s. FIG 2) sind vorteilhaft stoffschlüssig miteinander verbunden.

Das erste Material 8 ist in einem Bereich des Rotors 3 ausgebildet, in welchem ein q-Flusspfad 51, 52 eines magnetischen Flusses, der von einem von der Statorwicklung 11 erzeugbaren magnetischen Statorfeld hervorrufbar ist, liegt. Das magnetische Statorfeld und somit der magnetische Fluss werden durch Bestromung der Statorwicklung 11 erzeugt.

Das zweite Material 9 ist in einem Bereich des Rotors 3 ausgebildet, in welchem ein q-Flusspfad 51, 52 des magnetischen Flusses liegt.

Vorteilhaft ist das erste Material 8, ein Material, das die Führung eines magnetischen Flusses erleichtert. Das erste Material 8 enthält beispielsweise Eisen und/oder Kobalt bzw. eine Legierung aus Eisen oder Eisenkobalt. Eine Sättigungsinduktion des Materials von mindestens 1,8 T, vorteilhaft mindestens 2,1 T, ist von Vorteil.

Das erste Material 8 ist vorteilhaft derart im Rotor 3 angeordnet, dass es einerseits den magnetischen Fluss des Statorfeldes im d-Flusspfad 5 des Rotors 3 besonders gut leitet und andererseits den magnetischen Fluss eines Permanentmagneten im q-Flusspfad 51, 52 des Rotors 3 besonders gut leitet.

Vorteilhaft ist das zweite Material 9 amagnetisch (insbesondere mit einer Sättigungsinduktion von ≤ 0,1 T) und stellt für den magnetischen Fluss einen hohen Widerstand dar.

Vorteilhaft weist das zweite Material 9 amagnetischen Stahl, beispielsweise E316 auf.

Das zweite Material 9 ist vorteilhaft so im Rotor 3 angeordnet, dass es den magnetischen Fluss des Statorfeldes im q-Flusspfad des Rotors 3 einen hohen Widerstand bietet und eine magnetische Streuung der Permanentmagnete im Rotor 3 reduziert.

Die Figur zeigt einen Innenumfang und einen Außenumfang des Rotors 3. Ein den Innenumfang des Rotors 3 umgebender Bereich 20 weist vorteilhaft das zweite Material 9 auf. Das Material ist vorteilhaft amagnetisch.

Zudem zeigt die Figur, dass an einem Außenumfang 57, 58, 59 des Rotors 3 eine Vielzahl von an den Außenumfang 57, 58, 59 des Rotors 3 angrenzende Bereiche vorhanden sind, welche vorteilhaft das zweite Material 9 enthalten.

Die Figur zeigt zudem ein drittes Material in Form eines Permanentmagneten 54, 55 und 56. Der Permanentmagnet 54 grenzt in der Figur an den Bereich 57 und den Bereich 20 an. Der Permanentmagnet 54 tangiert den Bereich 57 und den Bereich 20. Der Permanentmagnet 54 ist in der Figur in Form eines Rechtecks ausgebildet.

Die Bereiche 57 und 20 sind vorteilhaft wenigstens abschnittsweise derart ausgebildet, dass sie mit jeweils einer Seite des tangierenden rechteckigen Permanentmagneten 54 bündig sind. Eben dies ist auch beim rechteckig ausgebildeten Permanentmagneten 55 zu erkennen. Zwei an den Außenumfang 57, 58, 59 angrenzende Bereiche 58 und 59 sind abschnittsweise derart ausgebildet, dass sie mit jeweils einer Seite des rechteckigen Permanentmagneten 55 bündig sind.

Alternativ kann der Bereich 20 auch ein weiteres Material 12 aufweisen, welches besonders zugfest ist (<=500 MPa). So können hohe Pressungen auf die Welle 6 ermöglicht werden und maximal zulässige Drehzahlen der Maschine erhöht werden.

Die Magnete im q-Flusspfad des Rotors 3 erzeugen vorteilhaft ein eigenes magnetisches Feld in der q-Achse. Andererseits erzeugen sie auch einen magnetischen Widerstand gegen das Statorfeld der q-Achse.

Der hohe magnetische Widerstand führt vorteilhaft dazu, dass sich das Statormagnetfeld in der q-Achse nur gering ausbilden kann. Dies führt vorteilhaft zu einer hohen Drehmoment-Strom-Linearität und somit zu hohen Drehmomenten, die durch Permanentmagnetfeld und Statormagnetfeld gebildet werden.

FIG 2 zeigt eine Rotorlage 7. Der in FIG 1 gezeigte Rotor 3 weist vorteilhaft eine Mehrzahl an hintereinander angeordneten Rotorlagen 7 auf.

Die FIG 2 zeigt eine Rotorlage 7, welche aus wenigstens zwei Materialien gefertigt ist.

Die Materialien sind vorteilhaft stoffschlüssig, insbesondere mittels Metalldiffusion, miteinander verbunden. Eine Zugfestigkeit dieser Verbindung ist vorteilhaft größer als 200 MPa bei 200°C.

Zudem weist das Rotorblech eine Mehrzahl an Aussparungen auf. Eine Aussparung für die Welle 6 ist mit 0 gekennzeichnet. Zudem sind Aussparungen für Permanentmagnete mit 540 und 550 gekennzeichnet. Der Bereich, der den Innenumfang der Rotorlage 7 umgibt, kann als Ring bzw. ringförmig ausgebildet sein, wie in der Figur gezeigt. Der Bereich 20 kann dasselbe Material wie am Außenumfang angeordnete Bereiche 58, 59 aufweisen. Jedoch ist auch ein weiteres Material 12 im Bereich 20 denkbar, um eine Zugfestigkeit zu erhöhen. Dies ist beispielsweise hochlegierter Stahl.

Die am Außenumfang angeordneten Bereiche 58, 59 und 57 erhöhen auch eine Festigkeit der Rotorlage 7.

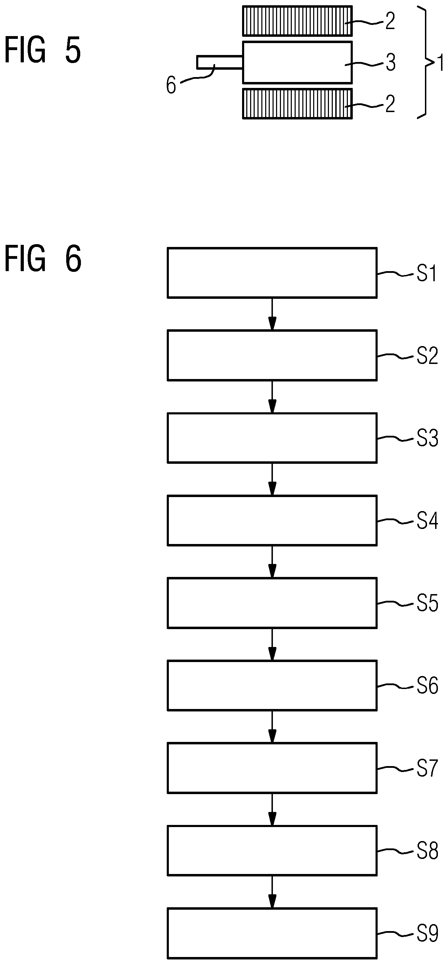

Die Figur zeigt eine Rotorlage 7 die durch das in FIG 6 beschriebene Verfahren herstellbar ist.

Vorteilhaft wird eine Mehrzahl dieser Rotorlagen 7 aneinandergefügt und anschließend ein vorgefertigter Permanentmagnet in die Aussparungen 550, 540 eingefügt.

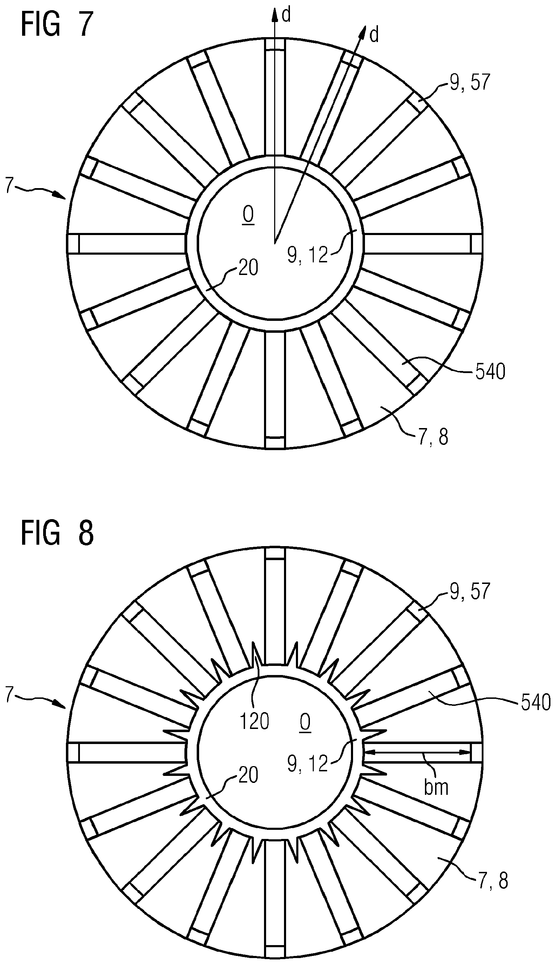

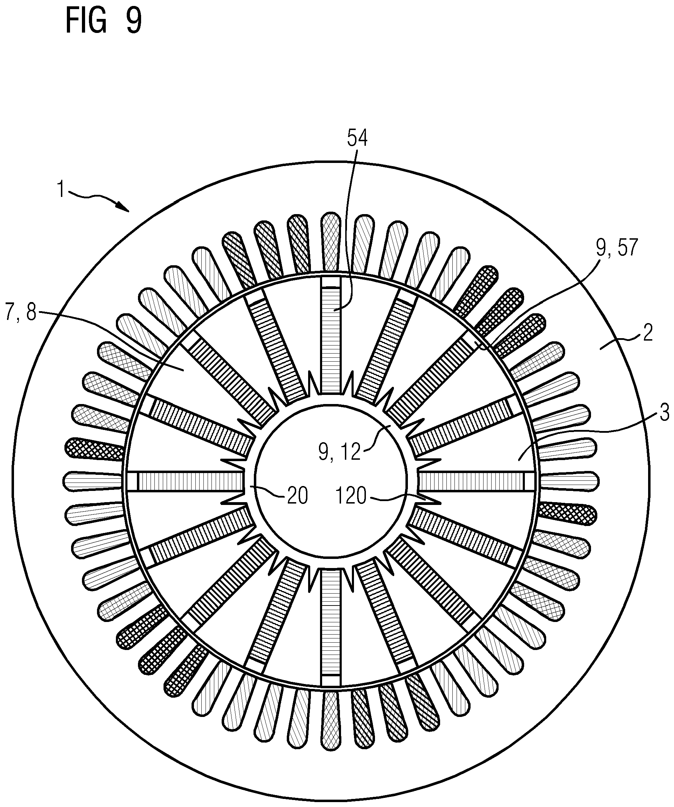

FIG 7 und FIG 8 zeigen weitere mögliche Ausführungen der Rotorlage 7. Die gezeigten Rotorlagen 7 sind z. B. für 16-polige Maschinen 1 (siehe auch FIG 9), insbesondere eine dreiphasige permanenterregte Synchronmaschine, geeignet. Vorteilhaft ist eine Polzahl p ≥ 4.

FIG 8 zeigt eine besondere Ausführungsform. Der Bereich 20 weist eine Mehrzahl an sternförmigen Fortsätzen 120, insbesondere aus weichmagnetischem Material, auf.

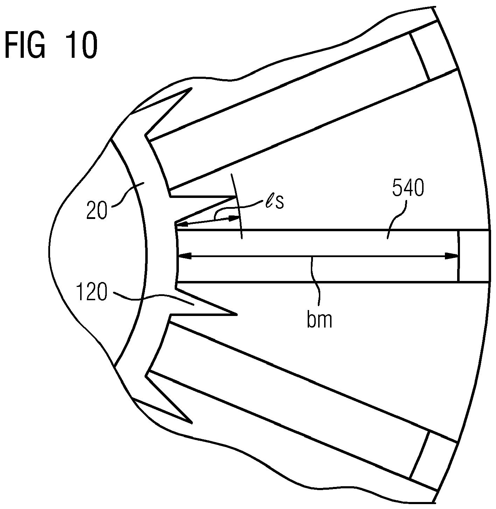

Eine Länge ls des sternförmigen Fortsatzes 120 (siehe FIG 10) beträgt vorteilhaft zwischen 20% und 100% von bm, wobei bm eine radiale Länge der Aussparung 540 beschreibt. Vorteilhaft wird die Aussparung 540 zu einem späteren Zeitpunkt mit einem Magneten gefüllt.

Dies kann beispielsweise ein Ferritmagnet, insbesondere keramischer Ferritmagnet, sein. Jedoch sind auch NdFeB- oder SmCo-Magnete denkbar.

Der Stator 2 in FIG 9 weist eine dreiphasige Drehstromwicklung auf. Die Magnetspulen sind vorzugsweise als Wicklungen um Einzelzähne ausgeführt. Vorzugweise ist eine Anzahl der bewickelten Zähne = 18.

Vorteilhaft weist der Stator eine Mehrzahl an hintereinander angeordneten Statorlagen auf, welche weichmagnetisches Material aufweisen, vorzugsweise mit einer Sättigungsinduktion von wenigstens 2,1 T.

Vorzugsweise ist eine Statorlage wenigstens 50 µm und höchstens 200 µm dick. Vorzugsweise ist die Statorlage dünner als 150 µm. Die Statorlage ist z. B. mittels eines Siebdruckverfahrens bzw. Schablonendruckverfahrens herstellbar.

Auch die Rotorlage 7 ist z. B. mittels eines Siebdruckverfahrens bzw. Schablonendruckverfahrens herstellbar. Vorzugsweise ist eine Rotorlage wenigstens 50 µm und höchstens 200 µm dick. Vorzugsweise ist die Rotorlage dünner als 150 µm.

Die Erfindung bietet den Vorteil, dass der magnetische Streufluss durch das amagnetische Material im Rotor sehr gering ist.

Die in FIG 9 gezeigte Ausführungsform weist besondere Vorteile auf: In dieser ragen vom inneren amagnetischen Ring 20 sternförmige Spitzen in die magnetischen Flussleitstücke. Dadurch wird der magnetische Streufluss im inneren Rotorbereich weiter reduziert und zudem die Festigkeit erhöht.

Die Maschine 1 hat einen sehr hohen Wirkungsgrad. Die Energieeffizienzklasse IE5 kann erreicht und sogar übertroffen werden. Besonders bei kleineren Maschinen (insb. unter 20 kW) ist der Vorteil gegenüber konventionellen Asynchron- und Synchronreluktanzmotoren deutlich.

Insbesondere durch den Einsatz von Ferritmagneten hat die Maschine 1 wenig Masse und ist günstiger. Ferrite haben zudem den Vorteil, dass sie günstiger sind als Seltenerdmagnete und ein geringeres CO2-Äquivalent aufweisen. Zudem ist ihre Verfügbarkeit höher.

Eine PM-Synchronmaschine mit keramischen Ferritmagneten hat besonders geringe Verluste, weil in den keramischen Magneten keine Wirbelströme fließen. Durch die deutliche Reduktion des rotorinternen Streuflusses werden auch die Kupferverluste im Stator reduziert.

Der dargestellte Rotor 3 ist robust und steif. Somit hat er eine hohe Lebensdauer, geringe Schwingungen und geringe Geräusche.

Die Maschine 1 eignet sich z. B. für hoch effiziente Industriemotoren, aber auch für die Elektromobilität.

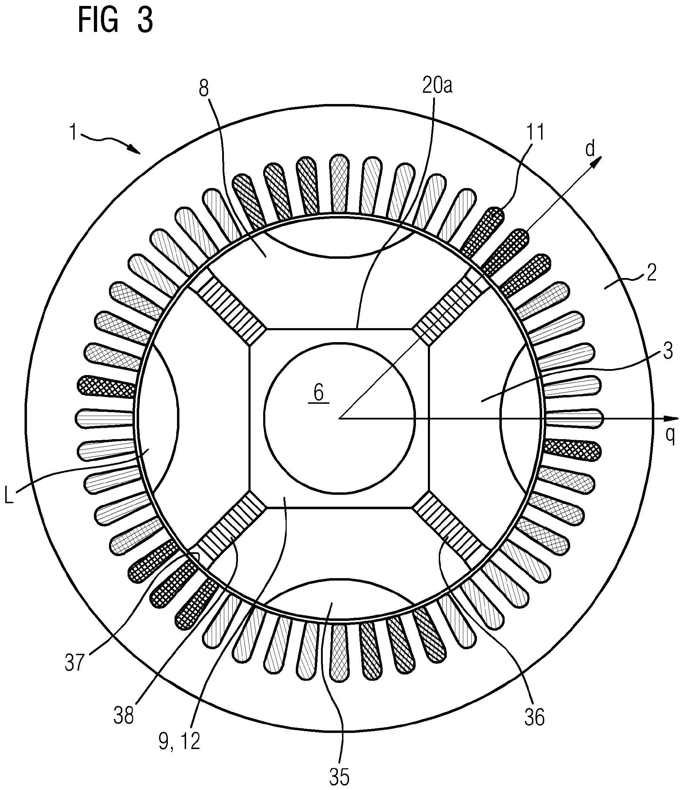

FIG 3 zeigt eine weitere Ausführungsform der Maschine 1.

Die Ausführungsform weist radiale Magnete 38 auf. Auch der den Innenumfang umgebende Bereich 20a ist anders geformt als in den bisher gezeigten Ausführungsformen. Der Bereich 20a ist in der Figur als Achteck mit acht Seiten ausgebildet, wobei vier Seiten eine erste Länge und weitere vier Seiten eine zweite Länge, wobei die zweite Länge gegenüber der ersten Länge verringert ist, aufweisen. Zwei gleich lange Seiten sind in der Figur gegenüberliegend angeordnet.

Der in dieser Ausführungsform gezeigte Rotor 3 ist nicht ganz rund, sondern weist Kreissegmentabschnitte auf, die beispielsweise mit Luft L gefüllt sind. Alternativ kann in diesem mit L gekennzeichneten Bereich auch ein amagnetisches Material eingefügt sein.

Der Rotor 3 weist am Außenumfang 57, 58, 59 angeordnete Bereiche 37 auf, welche das zweite Material 9 aufweisen.

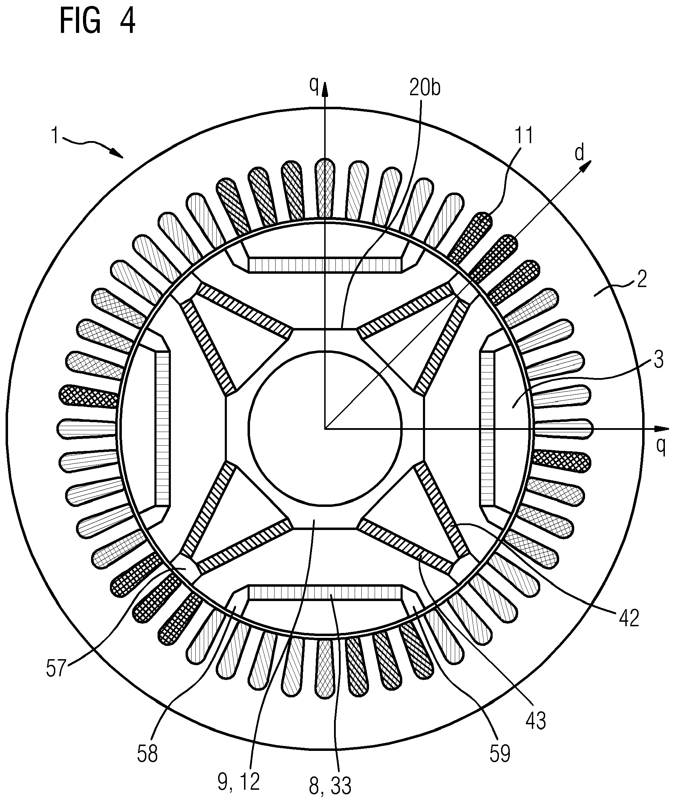

FIG 4 zeigt eine Ausführungsform die geteilte radiale Magnete 42, 43 aufweist. Dies bedeutet, dass eine Seite der Magnete 42, 43 an einem Bereich 57 angrenzt und die jeweils andere Seite des Permanentmagneten 42 bzw. 43 den den Innenumfang umgebenden Bereich 20b an unterschiedlichen Stellen tangiert.

Die gezeigten Permanentmagnete 42, 43 und 33 sind in der Figur schlanker ausgeführt als die Magnete in beispielsweise FIG 1.

FIG 5 zeigt die dynamoelektrische rotatorische Maschine 1, aufweisend einen Stator 2, einen Rotor 3 und eine Welle 6.

FIG 6 zeigt ein Verfahren zur Herstellung einer Rotorlage 7.

Der beschriebene Rotor 3 weist vorteilhaft eine Mehrzahl an hintereinander angeordneten Rotorlagen 7 auf. Die Rotorlage 7 umfasst eine Mehrzahl an Bereichen, die unterschiedliche Materialien aufweisen, wenigstens jedoch ein erstes Material und ein zweites Material.

In einem Verfahrensschritt S1 erfolgt ein Aufbringen einer ersten Suspension, aufweisend wenigstens ein Bindemittel und Festteilchen, durch eine erste Schablone auf eine Grundfläche zum Erhalt eines ersten Grünkörpers.

Die erste Schablone bildet die Bereiche aus, die das erste Material aufweisen.

Eine zweite Schablone bildet vorteilhaft die Bereiche ab, die das zweite Material aufweisen.

In einem Verfahrensschritt S2 erfolgt demnach ein Aufbringen einer zweiten Suspension, aufweisend wenigstens ein Bindemittel und Festteilchen durch die zweite Schablone auf eine Grundfläche zum Erhalt eines zweiten Grünkörpers.

In einem optionalen Verfahrensschritt S3 kann ein Austreiben des Bindemittels aus dem ersten Grünkörper erfolgen.

In einem optionalen Verfahrensschritt S4 kann ein Austreiben des Bindemittels aus dem zweiten Grünkörper erfolgen.

Das Austreiben des Bindemittels wird vorzugsweise mittels Entbinderung bewerkstelligt.

In einem Verfahrensschritt S5 werden die beiden Grünkörper zusammengefügt.

Alternativ oder zusätzlich kann das Austreiben des Bindemittels nach Zusammenfügung der Grünkörper in einem Verfahrensschritt S6 erfolgen.

Es können somit verschiedene Vorgehensweisen verfolgt werden: Das jeweilige Bindemittel aus dem ersten Grünkörper und/oder dem zweiten (und/oder weiteren) Grünkörper kann vor dem Zusammenfügen in einem Verfahrensschritt S3 und einem Verfahrensschritt S4 des ersten Grünkörpers und des zweiten Grünkörpers (und/oder weiteren) und/oder nach dem Zusammenfügen (siehe Verfahrensschritt S6) ausgetrieben werden.

In einem Verfahrensschritt S7 erfolgt ein Schaffen eines dauerhaften stoffschlüssigen Zusammenhalts der beiden Grünkörper und der Festteilchen, durch Erwärmung und/oder Verdichtung, insbesondere mittels Sinterung.

In einem Verfahrensschritt S8 werden die Rotorlagen 7 aneinandergefügt.

In einem Verfahrensschritt S9 werden Permanentmagnete in die Aussparungen eingebracht.

## Patentansprüche

1. Dynamoelektrische rotatorische Maschine (1), aufweisend
- einen Stator (2) mit einer Statorwicklung (11),
- einen Rotor (3) mit einer wenigstens im Wesentlichen zylindrischen Ausnehmung (0) zur Aufnahme einer Welle (6), wobei der Rotor (3) ein erstes Material (8) und ein zweites Material (9) aufweist, wobei das erste Material (8) in einem Bereich des Rotors (3) ausgebildet ist, in welchem ein d-Flusspfad (5) eines magnetischen Flusses der von einem von der Statorwicklung (11) erzeugbaren magnetischen Statorfeld hervorrufbar ist, liegt, wobei das zweite Material (9) in einem Bereich des Rotors (3) ausgebildet ist, in welchem ein q-Flusspfad (51, 52) des magnetischen Flusses liegt.

2. Dynamoelektrische rotatorische Maschine (1) nach Anspruch 1, wobei das erste Material (8) ein weichmagnetisches Material ist, beispielsweise Eisen und/oder Kobalt.

3. Dynamoelektrische rotatorische Maschine (1) nach einem der vorhergehenden Ansprüche, wobei das zweite Material (9) ein amagnetisches Material ist, beispielsweise amagnetischer Stahl, z.B. E316.

4. Dynamoelektrische rotatorische Maschine (1) nach einem der vorhergehenden Ansprüche, wobei der Rotor (3) einen einen Innenumfang des Rotors (3) umgebenden Bereich (20, 20a, 20b) aufweist, in welchem das zweite Material (9) ausgebildet ist.

5. Dynamoelektrische rotatorische Maschine (1) nach einem der vorhergehenden Ansprüche, wobei der Rotor (3) einen an einen Außenumfang des Rotors (3) angrenzenden Bereich (57, 37, 41) aufweist, in welchem das zweite Material (9) ausgebildet ist.

6. Dynamoelektrische rotatorische Maschine (1) nach einem der Ansprüche 4 oder 5, wobei zwischen dem den Innenumfang umgebenden Bereich (20, 20a, 20b) und dem an den Außenumfang angrenzenden Bereich (57, 37, 41) ein Bereich angeordnet ist, in welchem ein drittes Material (54, 38, 42, 43) ausgebildet ist.

7. Dynamoelektrische rotatorische Maschine (1) nach Anspruch 6, wobei das dritte Material (54, 38, 42, 43) ein permanentmagnetisches Material ist.

8. Dynamoelektrische rotatorische Maschine (1) nach einem der Ansprüche 6 oder 7, wobei das dritte Material (54, 38, 42, 43) den den Innenumfang umgebenden Bereich (20, 20a, 20b), und den an den Außenumfang angrenzenden Bereich (57, 37, 41) tangiert.

9. Dynamoelektrische rotatorische Maschine (1) nach einem der Ansprüche 6 bis 8, wobei der Bereich (54, 38, 42, 43), in welchem das dritte Material ausgebildet ist, in Form eines Rechtecks ausgebildet ist, wobei der den Innenumfang umgebende Bereich (20, 20a, 20b) wenigstens einen Abschnitt aufweist, der so geformt ist, dass er mit einer Seite des tangierenden rechteckigen Bereichs bündig ist.

10. Dynamoelektrische rotatorische Maschine (1) nach einem der Ansprüche 6 bis 9, wobei der am Außenumfang angrenzende Bereich (57, 37, 41) wenigstens einen Abschnitt aufweist, der so geformt ist, dass er mit einer Seite des tangierenden rechteckigen Bereichs bündig ist.

11. Dynamoelektrische rotatorische Maschine (1) nach einem der Ansprüche 6 bis 10, wobei am Außenumfang angrenzend zwei weitere Bereiche (58, 59) ausgebildet sind, in welchen das zweite Material (9) ausgebildet ist, wobei zwischen den weiteren Bereichen (58, 59) und diese tangierend ein weiterer Bereich (33) ausgebildet ist, in welchem das dritte Material ausgebildet ist.

12. Dynamoelektrische rotatorische Maschine (1) nach einem der vorhergehenden Ansprüche, wobei das erste Material (8) und das zweite Material (9) stoffschlüssig verbunden sind.

13. Dynamoelektrische rotatorische Maschine (1) nach einem der vorhergehenden Ansprüche, wobei der den Innenumfang umgebende Bereich (20, 20a, 20b) sternförmige Fortsätze (120) aufweist.

14. Rotor (3) für eine dynamoelektrische rotatorische Maschine (1) nach einem der Ansprüche 1 bis 13, aufweisend eine Mehrzahl hintereinander angeordneter Materiallagen.

15. Verfahren zur Herstellung eines Rotors (3) nach Anspruch 14, wobei eine Materiallage wenigstens einen ersten Bereich, aufweisend ein erstes Material, und wenigstens einen zweiten Bereich, aufweisend ein zweites Material, umfasst, wobei die Materiallage ferner wenigstens eine Aussparung umfasst, mit folgenden Schritten:
- Aufbringen einer ersten Suspension, aufweisend wenigstens ein Bindemittel und Festteilchen, durch eine erste Schablone auf eine Grundfläche zum Erhalt eines ersten Grünkörpers, wobei der erste Bereich von der ersten Schablone abgebildet wird,
- Aufbringen einer zweiten Suspension, aufweisend wenigstens ein Bindemittel und Festteilchen, durch eine zweite Schablone auf eine Grundfläche zum Erhalt eines zweiten Grünkörpers, wobei der zweite Bereich von der zweiten Schablone abgebildet wird,
- Zusammenfügen des ersten Grünkörpers und des zweiten Grünkörpers,
- Schaffen eines dauerhaften, stoffschlüssigen Zusammenhalts der beiden Grünkörper und der Festteilchen durch Erwärmung und/oder mittels Verdichtung, insbesondere mittels Sinterung, zur Bildung der Materiallage,
- Anordnen einer Mehrzahl an Materiallagen,
- Einfügen von Magnetmaterial, insbesondere vorgefertigtem Magnetmaterial, in die Ausnehmung.
